Europäisches Patentamt

European Patent Office

Office européen des brevets

(19)

(11) EP 0 770 877 A1

(12) **EUROPÄISCHE PATENTANMELDUNG**

(43) Veröffentlichungstag:
02.05.1997 Patentblatt 1997/18

(51) Int. Cl.⁶: **G01P 13/04**, H02H 3/52

(21) Anmeldenummer: 96117059.4

(22) Anmeldetag: 24.10.1996

(84) Benannte Vertragsstaaten:
AT BE CH DE DK ES FI FR GB GR IE IT LI LU MC
NL PT SE
Benannte Erstreckungsstaaten:
AL LT LV SI

(30) Priorität: 27.10.1995 DE 19539915

(71) Anmelder: Elan Schaltelemente GmbH
D-35435 Wettenberg (DE)

(72) Erfinder:
• Krauskopf
35444 Biebertal (DE)
• Ziegler, Olaf
56379 Geilnau (DE)

(74) Vertreter: Stoffregen, Hans-Herbert, Dr. Dipl.-
Phys.
Patentanwalt,
Friedrich-Ebert-Anlage 11b
63450 Hanau (DE)

(54) **Verfahren zur Überwachung wie Stillstands- und/oder Einrichtungsdrehzahlüberwachung eines Antriebs, insbesondere hochdynamischen Servoantriebs, sowie Lastrelais insbesondere zur Verwendung bei einem entsprechenden Verfahren**

(57) Die Erfindung bezieht sich auf ein Verfahren zur Überwachung wie Stillstands- und/oder Einrichtdrehzahlüberwachung eines Antriebs, insbesondere hochdynamischen Servoantriebs, mit dem Fehler überaus schnell detektiert werden können. Hierzu wird vorgeschlagen, daß durch Analyse und/oder Vergleich der Strangströme und/oder -spannungen des Antriebs die Überwachung erfolgt.

Abbildung 2.1:

## Beschreibung

Die Erfindung bezieht sich auf ein Verfahren zur Überwachung wie Stillstands- und/oder Einrichtdrehzahlüberwachung eines Antriebs, insbesondere hochdynamischen Servoantriebs. Auch bezieht sich die Erfindung auf ein Lastrelais insbesondere bestimmt zur Anwendung bei einem Verfahren zur Überwachung wie Stillstands- und/oder Einrichtdrehzahlüberwachung eines Antriebs, insbesondere hochdynamischen Servoantriebs, und/oder zum sicheren Abschalten des Antriebs.

Um den Stillstand eines Antriebes von einer gefahrbringenden Bewegung unterscheiden bzw. überprüfen zu können, ob es sich bei einem Drehen des Antriebes um ein gewolltes Einrichtung oder ebenfalls um eine unzulässige Bewegung wie Anfahren des Antriebes handelt, ist es nach dem Stand der Technik bekannt, die Bewegung zum Beispiel mittels eines Inkrementalgebers, also aufgrund mechanischer Detektion zu überwachen. Sollten die von einer rein mechanischen Bewegung abgeleiteten Bewegung abgeleiteten Signale zu dem Ergebnis führen, daß es sich um eine unzulässige Bewegung handelt, so erfolgt wiederum auf mechanischem Weg eine Abschaltung, und zwar über Relais. Hierdurch bedingte Zeitverzögerungen sind nachteilig und gegebenenfalls gefährlich.

Der vorliegenden Erfindung liegt die Aufgabe zugrunde, einen Fehler eines Antriebes, insbesondere hochdynamischen Antriebes, überaus schnell zu detektieren und diesen sodann schnell abschalten zu können. Dabei soll sicher unterschieden werden, ob eine erfolgte Belastung der Welle des Antriebes einer Lageregelung zuzuschreiben ist oder ob eine unzulässige Bewegung wie ein Anfahren erfolgt. Auch soll unterschieden werden können, ob eine Bewegung der Welle durch Einrichten eines von der Welle angetriebenen Werkzeuges hervorgerufen wird oder ebenfalls eine unzulässige Bewegung aufgetreten ist.

Ferner soll ein überaus schnell reagierendes Lastrelais insbesondere zur fehlersicheren Überwachung eines Antriebs zur Verfügung gestellt werden, das bei Fehlfunktionen keine gefahrbringenden Bewegungen zuläßt.

Die Aufgabe wird durch die den Ansprüchen zu entnehmenden Maßnahmen gelöst. Insbesondere ist vorgesehen, daß durch Analyse und/oder Vergleich der Motorströme und/oder -spannungen des Antriebs die Überwachung erfolgt. Dabei kann eine dynamische Stillstandsüberwachung durch Analyse der Strang- oder Außenleiterspannungen, Analyse deren Oberwellenanteile, sequentielle Spannungsauswertung, durch Analyse der Strang- oder Außenleiterströme durch Analyse der Signalflanken oder Auswertung der Phasenbeziehungen erfolgen, wobei eine kontinuierliche Signalabtastung oder Stromfolgeauswertung durchführbar ist. Eine Überwachung einer Einrichtdrehzahl kann durch Analyse der Strang- oder Außenleiterströme insbesondere durch sequentielle Stromauswertung erfolgen.

Nach einem ebenfalls eigenerfinderischen Vorschlag ist vorgesehen, daß das Lastrelais als überwachtes Halbleiterbauelement ausgebildet ist.

Weiterbildungen und Ausgestaltungen, die jeweils für sich und/oder in Kombination Schutz genießen sollen, ergeben sich sowohl aus der nachfolgenden Beschreibung als auch den Ansprüchen und deren Merkmalen -für sich und/oder in Kombination-.

Mit der erfindungsgemäßen Lehre werden unter anderem Wege zur Realisierung einer Stillstandsüberwachung für hochdynamische Antriebe aufgezeigt. Durch Einsatz elektronischer Bauelemente wird gegenüber herkömmlicher Stillstandsüberwachungseinrichtungen eine kürzere Detektionszeit sowie eine kürzere Abschaltzeit realisiert.

Hinsichtlich der Detektion wird der Zeitraum zwischen dem Auftreten der Spannungs.- bzw.- Stromsignale auf den Motorleitungen und dem, durch die Massenträgheit des Antriebssystems verzögerten, Motoranlauf ausgenutzt, um eine fehlerhafte Ansteuerung des Motors möglichst früh zu erkennen. Während herkömmliche Systeme die zeitlich verzögerte, mechanische Bewegung der Motorwelle detektieren und somit wertvolle Zeit im Hinblick auf schnelles Abschalten verschenkt wird, werden durch nachstehend beschriebene erfindungsgemäße Maßnahmen entscheidende Zeitvorteile erzielt. Durch Auswertung der Spannungs.- bzw. Stromsignalverläufe wird der Sytemstatus kontinuierlich überwacht und die praktische Realisierung einer hochdynamischen Stillstandsüberwachung ermöglicht. Durch die erfindungsgemäße elektronische Signalauswertungen werden folgende Funktionen realisiert:

- Detektion einer unerlaubten Beschleunigung aus dem Lageregelbetrieb,
- Unterscheidung zwischen einer unerlaubten Beschleunigung aus dem Lageregelbetrieb und einem externen Belastungswechsel während des Lageregelbetriebes,
- Überwachung einer frei wählbaren Einrichtdrehzahl.

Auch im Bereich der Freischaltung wird nach dem Stand der Technik durch den Einsatz mechanischer Relais-Bausteine wertvolle Zeit verschenkt. Die Abfallzeit eines schnellen Relais überschreitet die eines Halbleiters um ein Vielfaches. Deshalb wird erfindungsgemäß ein Einsatz von geeigneten Halbleiterelementen bzw. Röhren im Lastkreis der Stillstandsüberwachung vorgeschlagen. Durch die Entwicklung eines elektronischen Lastrelais werden die Anforderungen im Hinblick auf eine sehr kurze Abschaltzeit realisiert. Die integrierte Überwachung der Halbleiterbauelemente gewährleistet einen sicheren Praxiseinsatz.

Im folgenden wird die prinzipielle Funktion und der schematische Aufbau des entwickelten elektronischen Lastrelais mit Leistungshalbleiter bzw. Röhren erläutert.

Die funktionelle Überwachung der eingesetzten Leistungshalbleiter und die des einen Motors speisenden Reglerausgangs werden beschrieben.

Für die Abschaltung wurden als aktive Bauteile IGBT's verwendet. Diese Bauteile der neueren Halbleitergeneration zeichnen sich im Vergleich zu herkömmlichen Leistungsschaltern durch

- niedrige Ansteuerleistungen,
- niedrige Sättigungsspannung,
- sehr kurze Schaltzeiten

aus.

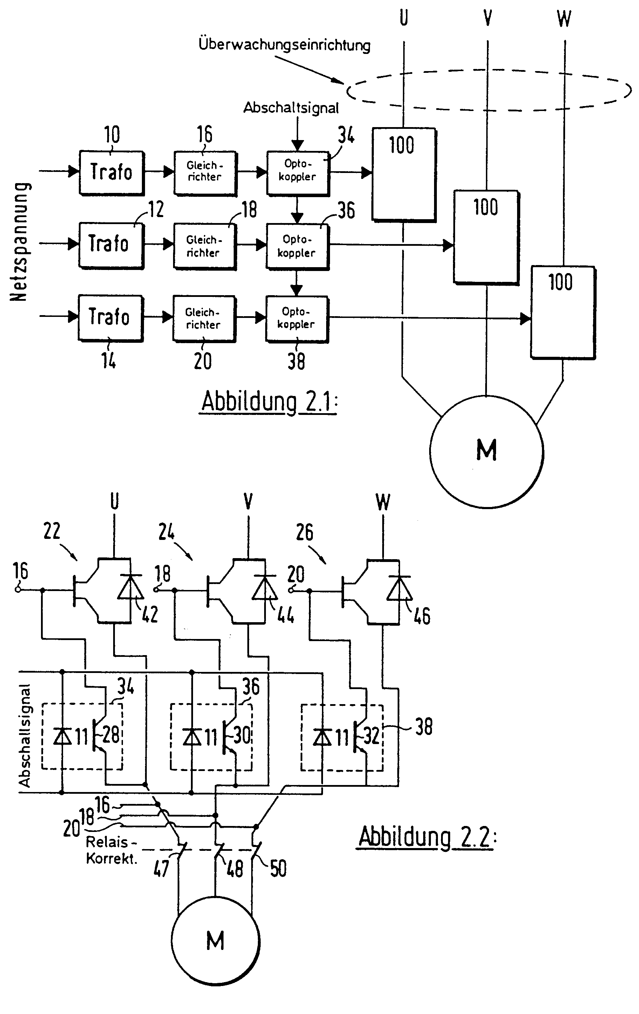

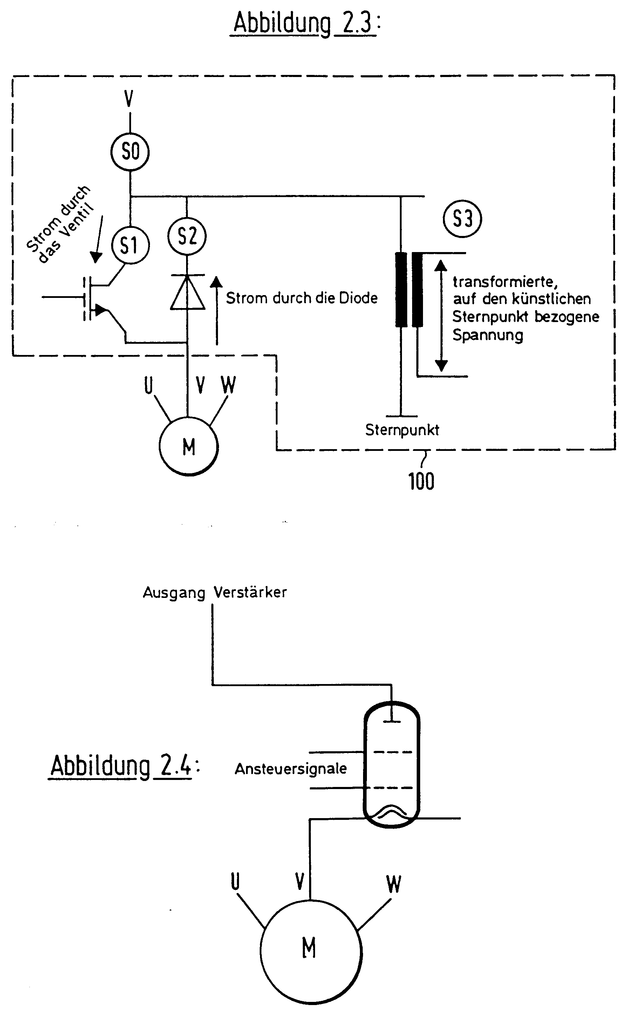

Die Abb. 2.1 zeigt die Prinzipdarstellung des Einsatzes des elektronischen Lastrelais.

Aus 3 magnetisch unabhängigen Transformatoren (10), (12), (14) wird eine Wechselspannung gewonnen. Diese wird über Gleichrichter (16), (18), (20) gleichgerichtet und stabilisiert. Die Gleichspannung wird über Vorwiderstände direkt auf den jeweiligen IGBT (22), (24), (26) gegeben. Sie liegt somit zwischen Gate und Emitter an. Parallel zu dieser Strecke liegt ein Schalttransistor (28), (30), (32) eines Ausgangs eines Optokopplers (34), (36), (38). Der Optokoppler (34), (36), (38) ist wiederum durch Vorwiderstände geschützt.

Liegt am Optokoppler (34), (36), (38) ein externes Abschaltsignal an, so schließt der Ausgangstransistor (28), (30), (32) des Optokopplers (34), (36), 38) die Gate-Emitterstrecke kurz, und der IGBT-Transistor (16), (18), (20) sperrt.

Ist der IGBT-Transistor (16), (18), (20) leitend, fließt der Strom der positiven Halbwelle über den IGBT (16), (18), (20) und der negative Strom über eine antiparallel geschaltete Diode (40), (42), (44).

Sind alle IGBT-Transistoren (22), (24), (26) gesperrt, fehlt das positive Potential, welches einen Stromfluß über die Diode (40), (42), (44) zur Folge haben könnte.

Ist ein IGBT (22), (24), (26) leitend, obwohl er sperren sollte, kann der Stromfluß erkannt werden.

Um zu jedem Zeitpunkt die volle Funktionsfähigkeit des elektronischen Lastrelais (22), (24), (26) zu gewährleisten, wird dieses kontinuierlich überwacht. Tritt im Betriebsfall eine Unterbrechung oder ein Kurzschluß des Halbleiterkanals auf, so wird dieser Störfall durch eine Überwachungselektronik analysiert und erkannt. Es erfolgt die Generierung eines Fehler-Statussignales, welches zur sofortigen Freischaltung des Antriebes genutzt werden kann.

Zu diesem Zweck ist der Einbau einer zweiten Sicherheitsstufe in Form eines zweiten elektronischen Lastrelais vorgesehen, welches in Reihe geschaltet wird. Diese vorsorgliche Abschaltmöglichkeit realisiert eine Unterbrechung der Energiezufuhr des Motors, bevor eine Gefahr entstehen kann.

Ein zusätzlicher Einbau eines Sicherheitsrelais ist nach wie vor sinnvoll realisierbar und bietet im Fehlerfall eine zusätzliche galvanische Trennung. Wird dieses Sicherheitsrelais vor das elektronische Lastrelais (22), (24), (26) geschaltet, so kann die Funktion dieses Sicherheitsrelais mit überwacht werden. Die Ansteuerung dieses Sicherheitsrelais kann gegebenenfalls durch das Fehler-Statussignal der Halbleiterüberwachung erfolgen.

Das Prinzip der Stromüberwachung wird anhand der Abb. 2.3 näher erläutert:

Die mit S1, S2 gekennzeichneten Bauelemente stellen Sensoren dar, mit denen die Flußrichtung durch das jeweilige Bauelement detektiert wird. Der Sensor S0 mißt den Gesamtstrom in einem Strang U bzw. V bzw. W. Bei einem vollem Umlauf des Drehfeldes muß der Strom in jedem Strang der Motorleitung einmal positiv und einmal negativ sein (Sinusschwingung). Dies gilt auch für die Strangspannung, die im Ausführungsbeispiel am Ausgang eines Transformators S3 gemessen wird. Mit Drehzahlüberwachungseinrichtungen werden die Drehfeldumläufe detektiert.

Die dabei entstehenden Bitmuster werden gespeichert, und zwar

- die Bitmuster der Spannungsumläufe und
- die Bitmuster der Stromumläufe.

Sodann werden Strom und Spannungsbitmuster verglichen.

Unterstellt man, daß ein sich im Laststromkreis vor dem elektronischen Lastrelais wie IGBT (22), (24), (26), der auch durch eine Elektronenröhre ersetzt werden kann, befindliches Bauteil defekt wäre, indem es hochohmig werden würde, könnte kein Strom durch das betroffene Bauteil fließen. Die Spannung würde jedoch an diesem Bauteil anliegen und es entsteht eine Bitmusterunterschied zwischen Strom und Spannung.

Dieser Unterschied wird über eine Auswertelogik ausgewertet und generiert gegebenenfalls ein Fehlersignal, über das zum Beispiel der Antrieb M stromlos geschaltet wird.

Mit den Sensoren (50), (51), (52), (53) wird ein Defekt eines (oder mehrere) elektronischen Bauteils (in Form eines Kurzschlusses ) detektiert, der in dem elektronischen Relais (22), (24), (26) und/oder der antiparallelen Diode (40), (42), (44) auftreten kann.

Wird ein Transistor (22), (24), (26) oder eine Diode (40), (42), (44) im durchgeschaltetem Zustand defekt und stellt einen Kurzschluß dar, so wird über diesen Transistor ein Rückwärtsstrom fließen, da an der Diode noch ein Spannungsabfall zu verzeichnen ist. Dieser Strom fließt nur bei einem defekten Transistor.

Des weiteren wird der Augenblicksstrom im Sensor S2 nicht mit dem Augenblicksstrom im Sensor S0 übereinstimmen, da der Differenzstrom über das defekte Bauteil fließt. Über eine Auswertelogik werden die verschiedenen Sensorspannungen ausgewertet.

Die Bitmuster für Strom und Spannung sind als Sollwerte abgespeichert.

Wird eine Abweichung von diesen Werten detektiert bei intakter Abschaltelektronik, kann das als Fehler im Ausgangsverstärker des Servomotors interpretiert werden. Somit ist auch eine Überwachung der Ausgangsstufe des Servoreglers möglich.

Um eine galvanische Trennung zu realisieren, kann je nach Anwendung ein Relais oder ein Schütz mit den Kontakten (47), (48), (50) in Serie mit den IGBT's (22), (24), (26) geschaltet werden. Der Strang U bzw. V bzw. W wird folglich im Ausführungsbeispiel über das Relais oder den Schütz bzw. dessen Kontakte (47), (48), (50) dann unterbrochen, wenn entweder über den Optokoppler (34), (36), (38) ein diesem zugeleitetes Abschaltsignal das elektronische Relais in Form des IGBT's (22), (24), (26) sperrt oder das Relais bzw. der Schütz wird angesteuert über ein von den Sensoren S0 bis S3 bzw. deren Auswerteschaltung erzeugtes Signal, welches bei Fehlerhaftigkeit des elektronischen Relais (22), (24), (26) und/oder der parallel geschalteten Diode (42), (44), (46) generiert wird. Selbstverständlich kann das Relais bzw. der Schütz durch ein elektronisches Relais zuvor beschriebener Art ersetzt werden.

Die in Abb. 2.3 mit (100) bezeichnete Schaltung wird in die Überwachungsschaltung für den Antrieb M gemäß Abb. 2.1 eingebaut.

Erwähntermaßen kann ein IGBT auch durch eine Röhre ersetzt werden.

Die Realisierung von elektronischen Relais mit Hilfe von Röhren bringt entschiedene Vorteile:

- Schnelligkeit,
- sichere und schnelle Öffnerketten,
- galvanische Trennung.

Hieraus ergibt sich auch, daß in Sichheitstechnik überall dort, wo eine schnelle galvanische Trennung erfolgen soll, eine Röhre einsetzbar ist.

Der Abb. 2.4 ist ein Schaltungsbeispiel ohne Ansteuerelektronik zu entnehmen.

Durch den Einsatz von Mehrgitterröhren können sichere Öffnerketten in einem Bauteil realisiert werden. Es kann erst dann ein Strom durch die Röhre fließen, wenn alle Gitter ein Potential haben, welches kein Abschirmfeld erzeugt. Mit Vertauschung des Gitterpotentials kann ebenfalls eine sicherere Schließerkette realisiert werden.

Nach besonders hervorzuhebenden Vorschlägen der Erfindung kann eine dynamische Stillstandsüberwachung eines Antriebes über Analysen von Motor- wie Strang- oder Außenleiterspannungen und/oder -strömen erfolgen. Aus Gründen der Einfachheit wird nachstehend -ohne die Erfindung einzuschränken- nur von Strangspannungen bzw. -strömen gesprochen.

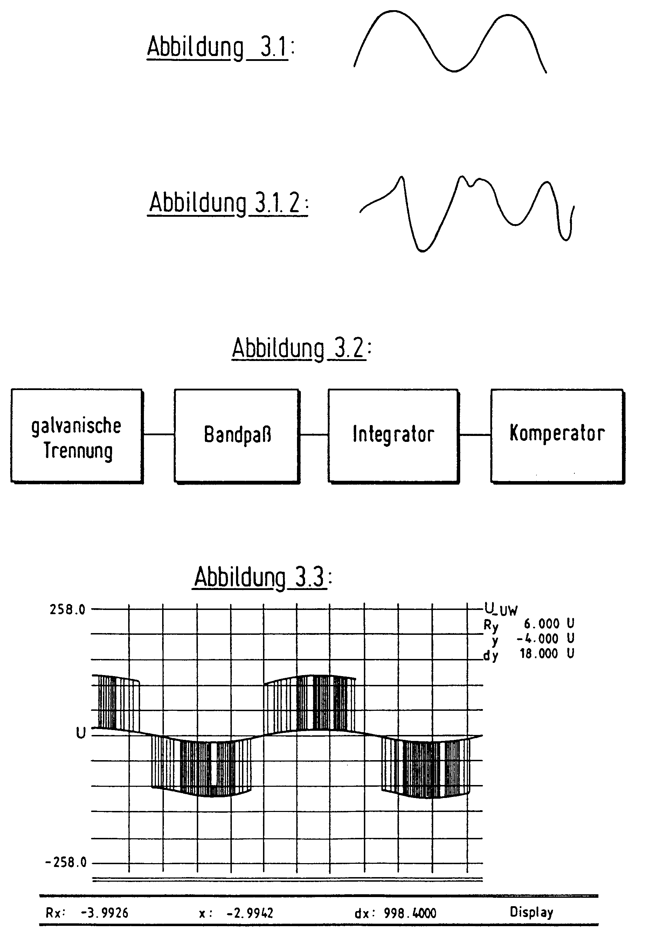

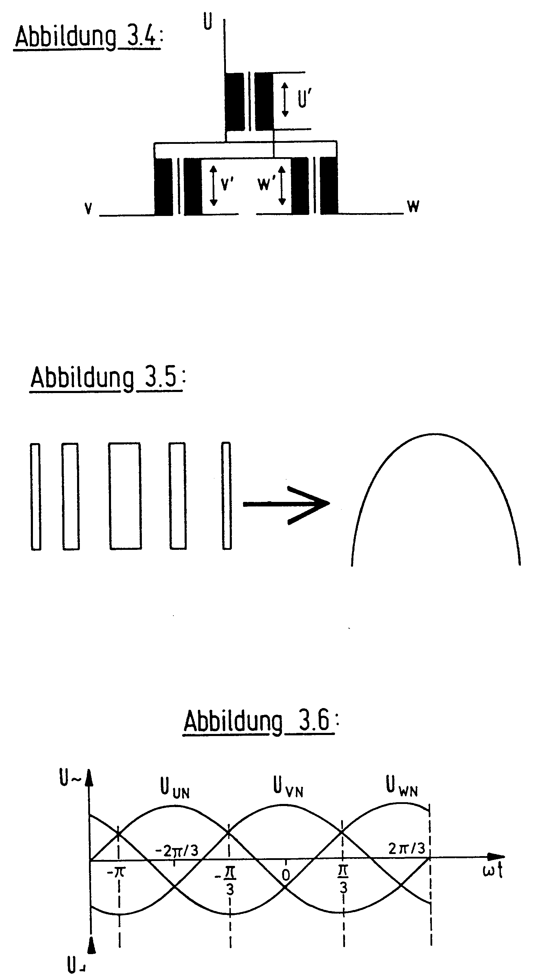

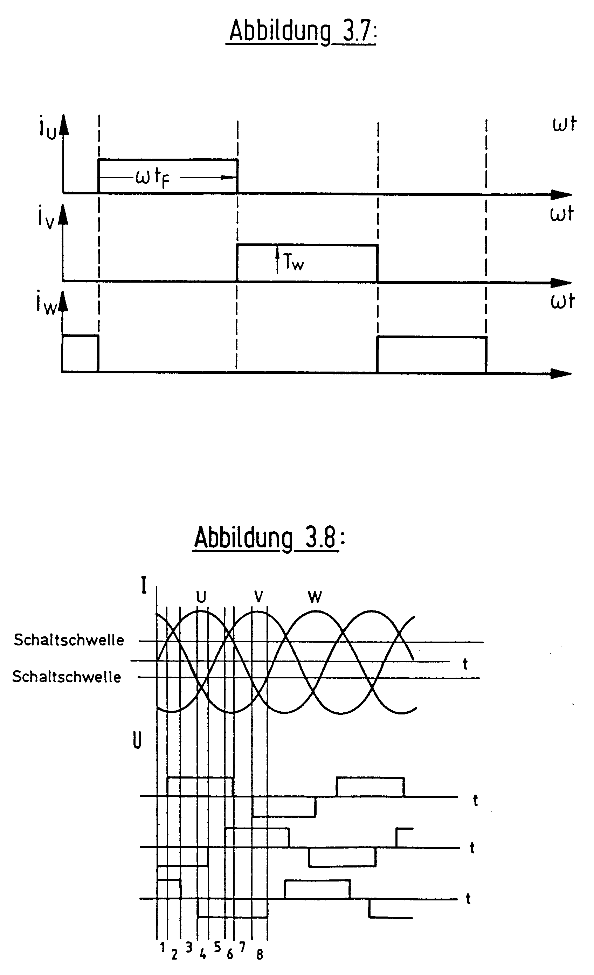

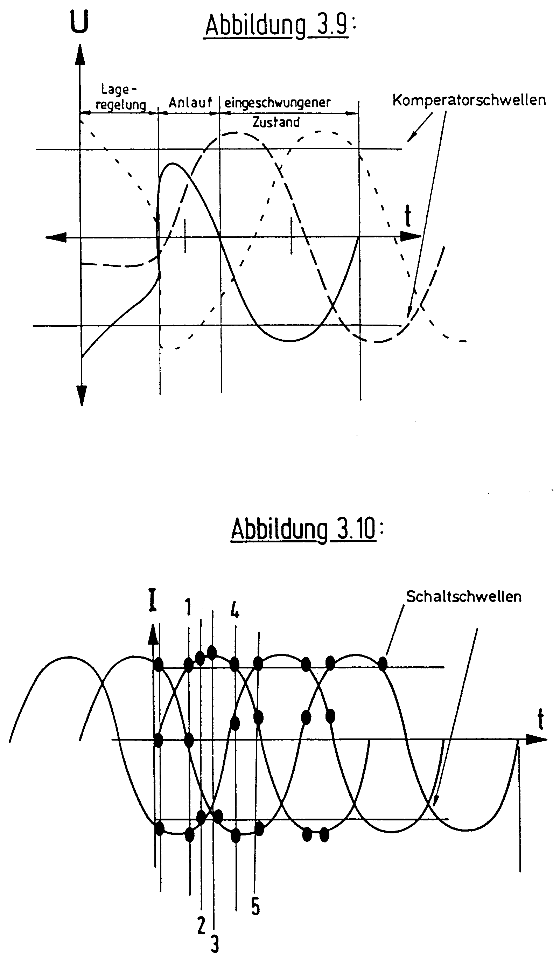

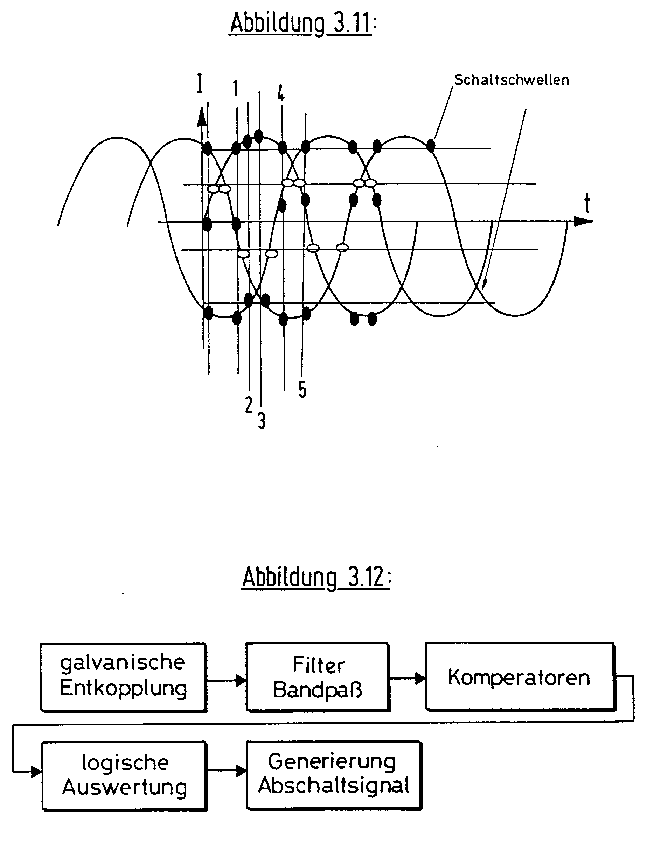

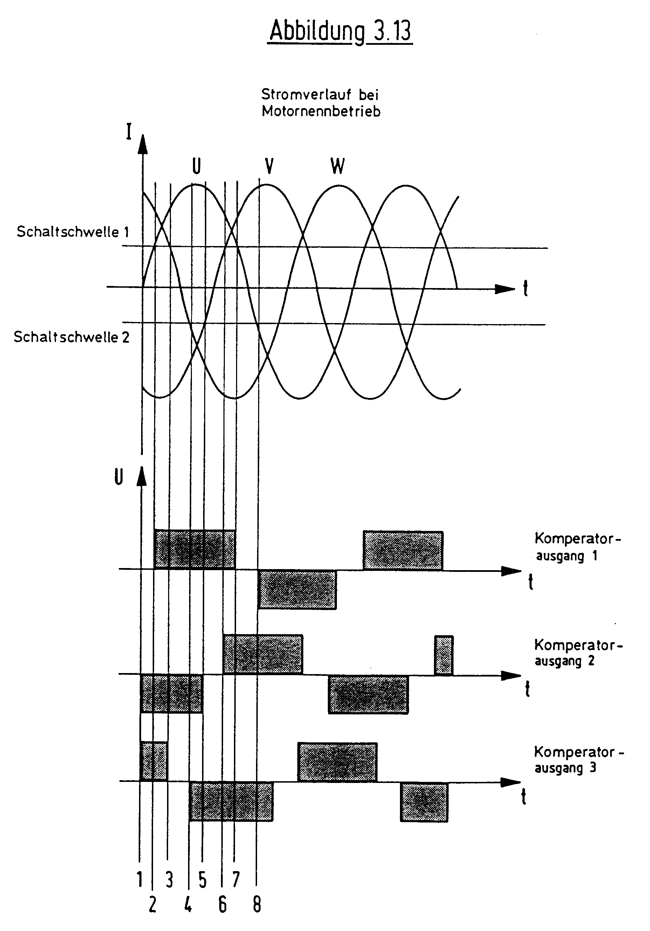

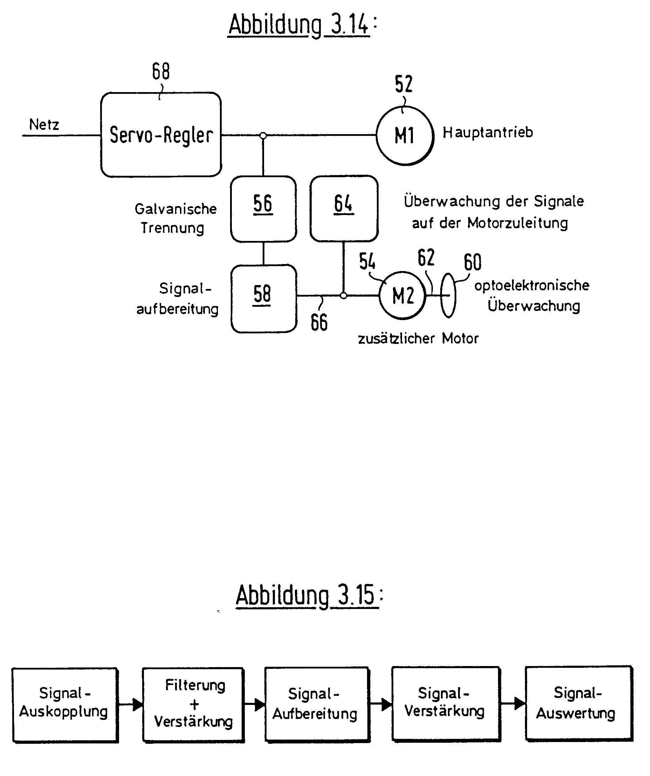

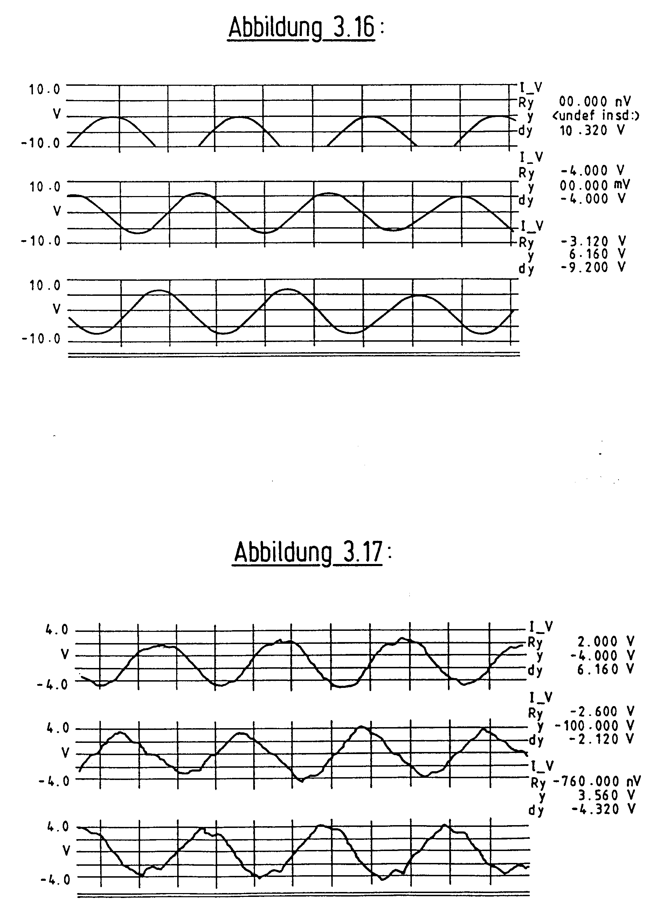

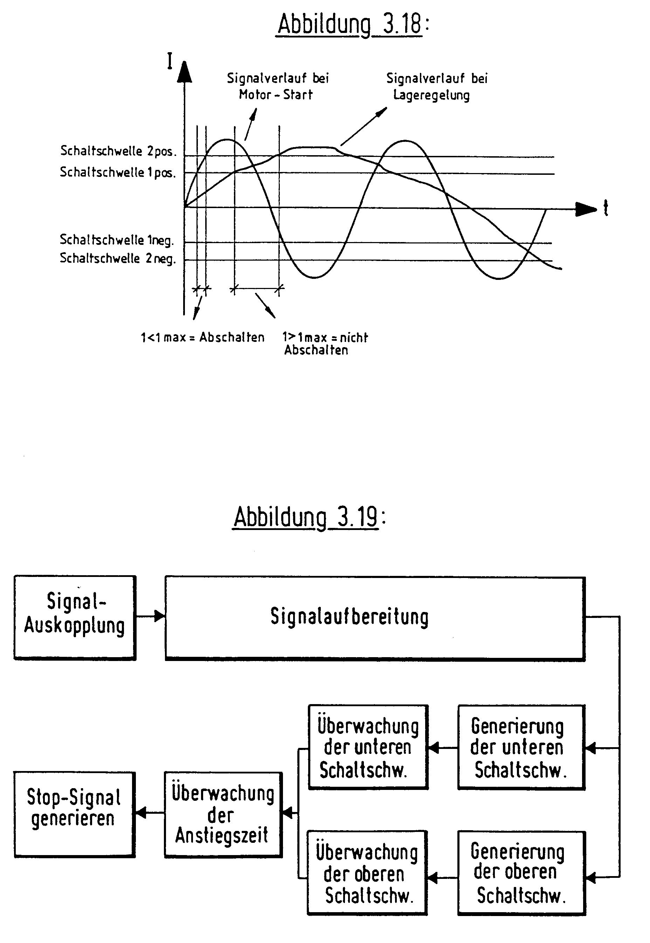

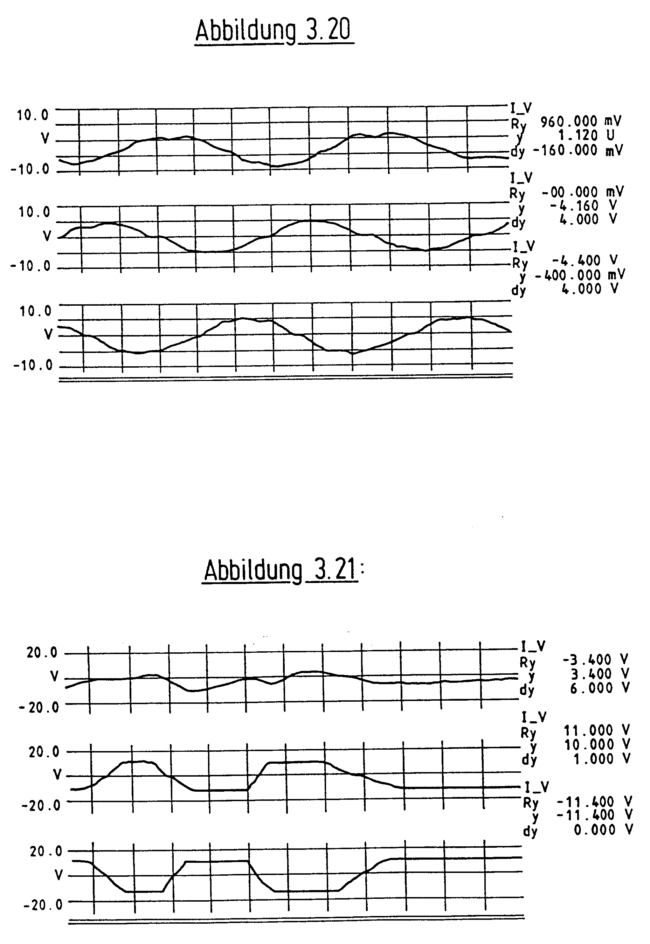

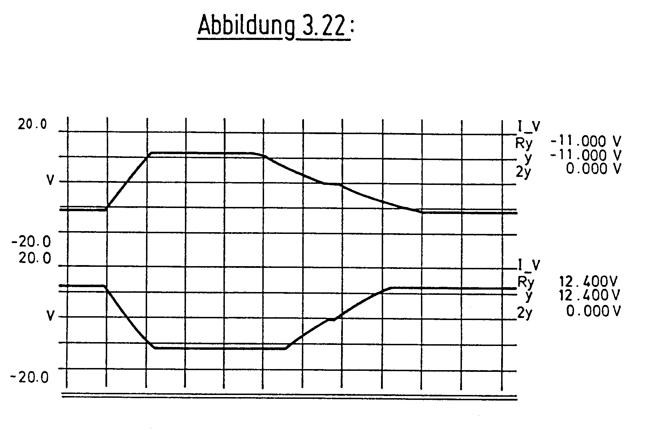

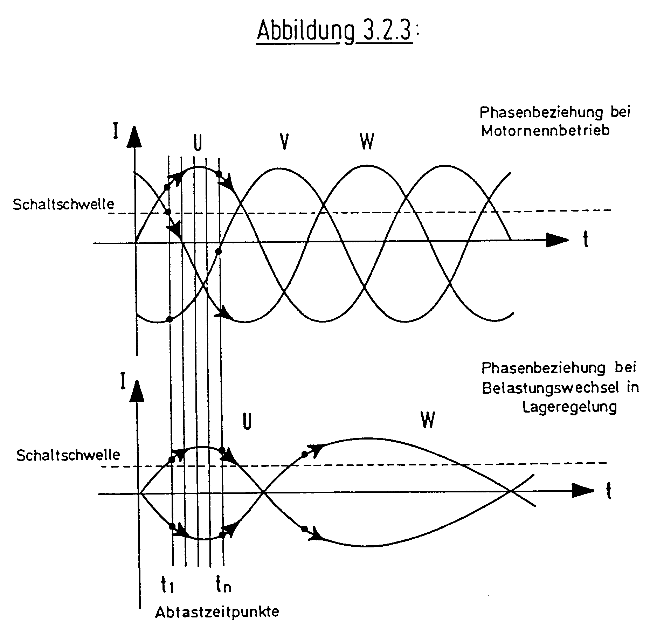

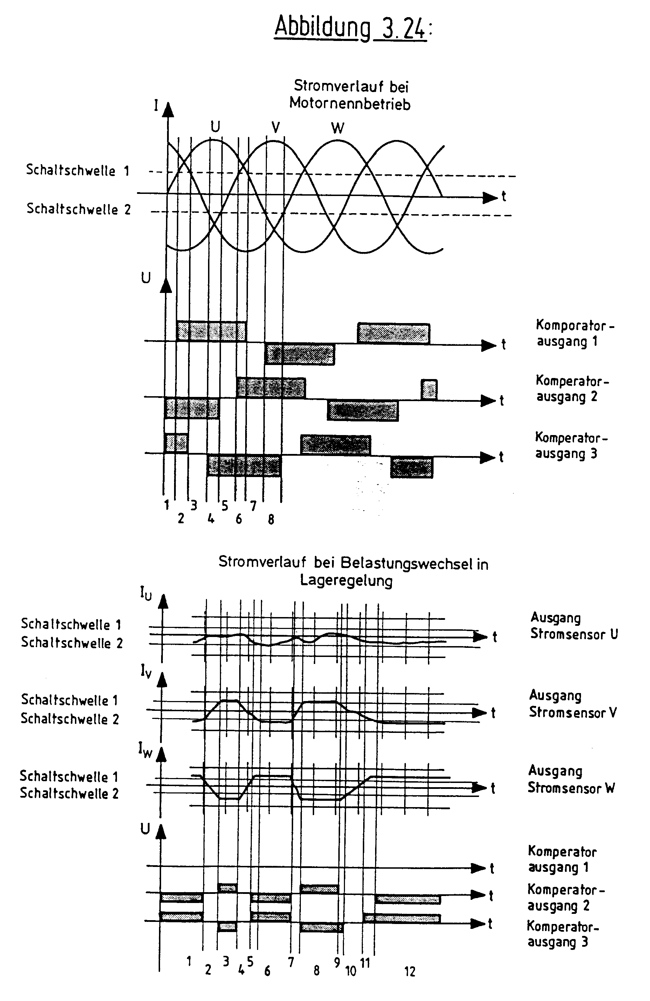

Die Überwachung durch eine Analyse der Strangspannungen soll anhand der Abb. 3.1 bis 3.15 erfolgen. So kann eine Analyse der Oberwellenanteile vorgenommen werden.

Eine Filterschaltung (Abb. 3.2), direkt an den Trafoausgängen, blockt die Grundschwingung ab und läßt nur den hochfrequenten Anteil der Motorversorgungsspannung durch. Dieser Anteil wird einer Integrationsschaltung zugeführt. Die Integrationsdauer kann manuell eingestellt werden. Nach Ablauf der Integrationszeit wird dieser Vorgang erneut gestartet, wodurch ein zyklisches Überwachen des Integrationsergebnisses gewährleistet ist.

Ist der Motor in Lageregelung` d. h., die Welle wird in eine vorgegebene Ruheposition bei auf den Motor durch das Magnetfeld hervorgerufenen Drehmoments gehalten, treten viele Oberschwingungen mit unterschiedlichen Frequenzen auf und am Integratorausgang liegt nach kurzer Zeit eine relativ hohe Spannung an (Abb. 3.1.2). Belastet man den Motor in der Lagegelung, so regelt er dem statischen Moment entgegen.

Dieser Regelvorgang erzeugt weitere verschiedene Oberwellen auf der Motorzuleitung. Läuft der Motor mit einer großen Winkelbeschleunigung an, ist der Anteil der Oberwellen erheblich geringer (Abb. 3.1). Der Integrator liefert seine minimale Ausgangsspannung, was zur Generierung eines Abschaltsignales verwendet werden kann.

Wie der Spannungsverlauf gemäß Abb. 3.1 zeigt, enthält das Signal hinter dem Bandpaß kaum Oberschwingungen` wenn der Motor mit einer großen Winkelbeschleunigung anläuft. Befindet sich der Motor in Lageregelung, liefert der Bandpaß keinen Sinus mehr. Vielmehr entstehen eine Vielzahl von Oberschwingungen, wie die Abb. 3.1.2 verdeutlicht.

Es kann auch eine sequentielle Spannungsauswertung erfolgen.

Ein Vorteil dieser Spannungsauswertung ist, daß kein Auftrennen der Motorleitungen erfolgen muß. Die Spannungen können direkt an den Motorleitungen abgegriffen werden.

Anhand der Abb. 3.3 wird rein beispielhaft der Spannungsverlauf bei einer Drehzahl von N = 3000 U/min gezeigt.

Drei in Stern geschaltete Transformatoren trennen die Spannung galvanisch von den Motorzuleitungen ab. So zeigt Abb. 3.4 drei in Stern geschaltete Transformatoren.

Die Spannungen werden durch aktive Bandfilter in sinusförmige Spannungen umgewandelt. Die Frequenz dieser Spannungen entspricht der Grundschwingung, der frequenzmodulierten Speisespannung. Eine Filterung der pulsweitenmodulierten Spannung ist der Abb. 3.5 zu entnehmen. Es entstehen drei um 120 verschobene Spannungen gemäß Abb. 3.6.

Diese Spannungen werden jeweils mit Komperatoren in Rechtecksignale umgewandelt, wie sich aus Abb. 3.7 ergibt.

Damit der Motor ein Drehfeld erzeugen kann, müssen die Spannungen in einer bestimmten Reihenfolge an den Motorklemmen anliegen. Diese Abläufe werden digital ausgewertet und analysiert. In der Lageregelung existiert kein Drehfeld. Es wird lediglich beim Anlauf erzeugt. Dies erkennt die digitale Impulsauswertung.

Eine weitere Möglichkeit zur Phasenauswertung stellt die Überwachung der Spannungrichtungsfolge der Strangspannungen dar. Wie zuvor beschrieben, werden ebenfalls die Spannungssignale ausgekoppelt, gefiltert und verstärkt. Diese Signale werden Komperatoreingängen zugeführt, welche bei Überschreitung der ersten Schaltschwelle einen positiven Spannungspegel und bei Unterschreiten der zweiten Schaltschwelle einen negativen Spannungspegel am Ausgang liefern. In der Zeit zwischen dem Durchschreiten der Schaltschwellen liegt der Komperatorausgang auf Null-Volt-Pegel. Dies wird durch die Abb. 3.8 prinzipiell verdeutlicht.

Aus Abb. 3.8 ist auch zu erkennen, daß drei zu unterscheidende Zustände entstehen, welche mit einem 2-Bit-Datenwort kodiert werden. Während den einzelnen, hier mit den Ziffern 1 .... 8 gekennzeichneten Zeiträumen entsteht eine bestimmte Kombination aus drei solcher 2-Bit-Datenwörter, d.h. der Schaltzustand aller drei "Phasenkomperatoren" wird in jedem Zeitraum zu einem 6-Bit-Datenwort zusammengefaßt. Die Reihenfolge, mit der diese 6-Bit-Datenwörter im zeitlichen Verlauf eines Drehspannungsystems auftreten, ist immer identisch und kann, wenn einmal bekannt, als binäre Datenfolge in einem EPROM abgespeichert werden. Wird im Verlauf der Signalüberwachung ein Anstieg der Spannungssignale auf einer der Motorleitungen detektiert, so wird das zu diesem Zeitpunkt vorliegende Datenwort mit Hilfe logischer Schaltungsgruppen identifiziert. Die Reihenfolge der im weiteren zeitlichen Verlauf eintreffenden Datenwörter werden mit der im EPROM abgelegten Reihenfolge verglichen. Dadurch kann bei Anlaufen des Motors die Rotorlage bestimmt werden.

Aus Abb. 3.9 ist das spannungsmäßige Anlaufverhalten eines Servo-Motors erkennbar.

Die Tatsache, daß die Spannung dem Strom um 90° voreilt, macht die Abschaltung über die Spannungsauswertung des Drehfeldes schneller als über eine Stromauswertung.

Des weiteren wird die sequenzielle Abfolge der Spannung überwacht. Dies soll anhand der Abb. 3.10 verdeutlicht werden.

Die Betrachtung der Zustände wird immer bei Überschreiten oder Unterschreiten einer Schaltschwelle vorgenommen. Bei Betrachtung von Zustand 1 würde das bedeuten:

Phase U überschreitet gerade die Komperatorschwelle während Phase V weder die obere noch die untere Schwelle erreicht.

Phase W befindet sich immer noch betragsmäßig oberhalb der unteren Schaltschwelle. Tritt der nächste Zustand ein, ändert sich immer nur der Ausgangswert eines Komperators.

Die Zustandsabfrage aller Phasen bei Änderung eines Komperatorausgangswertes einer Phase ermöglicht theoretisch ein Abschalten, bevor die Motorwelle eine mechanische Bewegung vollführt hat, da die Phasenverschiebung zwischen Strom und Spannung im Idealfall 90° beträgt und der Strom die Ursache für den Aufbau des Magnetfeldes ist.

Folgt gemäß Abb. 3.10 Zustand 1 ( wird durch das entsprechende Bitmuster identifiziert) Zustand 2 und entsprechend Zustand 2 Zustand 3 in der richtigen Reihenfolge, so wird ein Drehfeld aufgebaut. Die Anzahl der Zustände, die aufeinander im richtigen zeitlichen Ablaufen folgen müssen, können frei gewählt werden. Die Auflösung kann durch Einfügen weitere Komperatorschwellen erhöht werden, wie Abb. 3.12 verdeutlicht.

Die Abb. 3.12 und 3.13 zeigen noch einmal das Generieren eines Bitmusters in Abhängigkeit vom Strangverlauf bei Motorwarmbetrieb sowie ein Blockschaltbild.

Es besteht auch die Möglichkeit, eine Überwachung eines Hauptantriebes (52) mittels eines Referenzmotors (54) durchzuführen (Abb. 3.14).

Der Einsatz eines zusätzlichem Motors (Referenzmotors) (54) ermöglicht die schnelle Detektion einer unerlaubten Beschleunigung aus der Lageregelung heraus sowie die Unterscheidung zwischen einer unerlaubten Bewegung aus der Lagereglung und externen Belastungswechseln im Lageregelbetrieb.

Nach einer galvanischen Trennung (56) der Strangspannungen werden die Signale (58) so aufbereitet, daß die Ansteuerung des zweiten Motors (Referenzmotors) (54) möglich ist. Dieser Motor (54) ist in seinen mechanischen Abmessungen kleiner als der Hauptantrieb (52). Wegen der geringeren Abmessungen des Läufers und somit geringeren Massenträgheitsmomenten werden höhere Beschleunigungswerte gegenüber dem Hauptantrieb (52) erzielt. Die Bewegung des Läufers dieses zusätzlichen Motors (54) kann somit früher erfaßt werden, als die des Hauptantriebes (52), was ein Zeitvorteil gegenüber bisher eingesetzter Systeme zur Stillstandsüberwachung elektrischer Antriebe ist. Zur Detektion der Läuferbewegung des zusätzlichen Motors (54) werden bevorzugterweise nachstehend beschriebene zwei Wege beschritten. Eine optoelektronische Erfassung (60) der Bewegung der Motorwelle (62) und eine Auswertung (64) der Signalverläufe der Motorzuleitung (66) bilden jeweils ein autarkes System, mit dem beide Anforderungen erfüllt werden. Jedes dieser beiden Systeme kann einzeln eingesetzt werden.

Anhand des Blockschaltbilds gemäß Abb. 3.14 soll die erfindungsgemäße Bewegungsüberwachung mit zusätzlichem Motor (Referenzmotor) verdeutlicht werden.

Durch elektronische Auswertung des an der Motorwelle (62) befestigten optoelektronischen Gebers (60) kann sowohl die unerlaubte Beschleunigung aus der Lageregelung als auch die Unterscheidung zwischen einem unerlaubtem Beschleunigen aus der Lageregelung und einem externen Belastungswechsel in Lageregelung realisiert werden. Ein Belastungswechsel in Lageregelung führt zu keiner Abschaltung, da die Welle (62) des zusätzlichen Motors (54) in diesem Fall keine Bewegung durchführt. Erst durch Anlegen eines Drehfeldes an der Ständerwicklung des Hauptantriebes (52) werden die Läufer beider Motoren (52), (54) in Rotation versetzt. Ein entsprechender Statuseingang meldet dem System, ob sich der Hauptantrieb (52) in Lageregelung befinden muß oder nicht. Wenn ja, wird im Falle einer Bewegungdetektion das Abschaltsignal generiert.

Die Auswertung der eingespeisten Motorsignale kann durch Analyse der Strangströme in nachstehend beschriebener Art erfolgen.

Der Einsatz des zusätzlichen Motors (54) hat gegenüber bisher eingesetzten Systemen zur Stillstandsüberwachung folgende Vorteile:

- Der Anschluß kann direkt an Klemmen des Ausgangs eines Reglers (68) für den Hauptantrieb (52) erfolgen.
- Keine zusätzlichen Arbeiten zum Montieren eines Inkrementalgebers sind am Motor (52) nötig.
- Der Einsatz kann unabhängig vom Betrag des Motorstroms und der Zwischenkreisspannung des Hauptantriebes (52) erfolgen.
- Eine leichte Erkennung der Lageregelung, da die Welle (62) des Referenzmotors (54) bei Belastungsänderungen an der Welle des Hauptantriebes (52) im Lageregelbetrieb keine Bewegungen durchführen kann.

Die Signalauswertung nach dem zuvor beschriebenen Verfahren ergibt sich aus der Blockdarstellung gemäß Abb. 3.15.

Neben einer Überwachung des Antriebs durch Analyse der Strangspannung kann erwähntermaßen auch eine solche durch Analyse der Strangströme erfolgen.

Der Signalverlauf der Strangströme auf der Motorzuleitung wird mit Hilfe von Stromsensoren ausgekoppelt.

Bekanntlich wird bei Nenndrehzahl, trotz pulsweitenmoduliertem Signalverlauf der Strangspannung, ein sinusförmiger Stromverlauf erzeugt. Durch die Induktivität der Motorwicklungen wird der Stromverlauf integriert, was dem Verhalten eines Tiefpasses gleicht, mit dem die Grundschwingung aus dem pulsweitenmodulierten Signal herausgefiltert wird. Dem sinusförmigen Signalverlauf ist ein relativ kleine sägezahnförmige Schwingung mit der Frequenz des Abtastsignals der Pulsweitenmodulation überlagert. Die Amplituden der Strangströme verhalten sich proportional zu Motordrehzahl und Belastungsmoment, d.h. bei sinkender Motordrehzahl oder Belastung verringert sich die Amplitude der Ströme. Bei kleinen Drehzahlen treten vermehrt Verzerrungen der Signalverläufe auf. Dies ergeht rein beispielhaft aus den Abb. 3.16 und 3.17, in denen Signalverläufe von Strangströmen bei Motrodrehzahl N = 3000 min$^{-1}$ (Abb. 3.16) bzw. N = 15 min$^{-1}$ (Abb. 3.17) wiedergegeben sind.

Die Analyse kann zum Beispiel durch die der Signalflanken erfolgen.

Ein Kriterium zur Unterscheidung zwischen fehlerhaften Anlaufen des Motors und Belastungsschwankungen in Lageregelung ist die Auswertung der Flankensteilheit des Stromanstiegs. Dabei werden um einen Meßwert vier Schaltpunkte (zwei in positive und zwei in negativer Richtung) festgelegt. Das Abschaltsignal wird beim Überschreiten der zweiten Schaltschwelle in positiver oder negativer Richtung nur dann generiert, wenn die Auswertung der Anstiegsflanke eine genügend hohe Steigung aufweist. Die Steigung wird als zeitliche Differenz zwischen dem Überschreiten der ersten und zweiten Schaltschwelle ermittelt. Wird nur die erste Schaltschwelle überschritten und erfolgt innerhalb einer frei einstellbaren Zeit Tmax nicht das Überschreiten der zweiten Schaltschwelle, so wird nicht abgeschaltet. Das Diagramm gemäß Abb. 3.18 soll diese Funktion verdeutlichen.

Ein Aufbau der Schaltung, durch die eine Signalflankenanalyse erfolgen kann, ergibt sich rein prinzipiell aus der Blockdarstellung nach Abb. 3.19.

Bei allen Drehstrommotoren wie auch bei AC-Servomotoren beträgt die Phasenverschiebung zwischen den drei Außenleiterströmen 120 , damit eine Drehbewegung zustande kommt. Soll der Motor in Lageregelung betrieben werden, d.h. der Läufer des Motors eine vorgegebene Position einnehmen und auch in dieser beim Auftreten externer Momente verharren, so muß "die Rotation des Drehfeldes angehalten werden". Messungen am eingesetzten System zeigen, daß in Lageregelung und ohne externe Drehmoment an der Motorwelle in den drei Strängen der Motorzuleitung praktisch kein Strom zum fließen kommt. Erst bei Belastung durch ein externes Moment wird im Ständer des Motors, gemäß den Grundlagen der rotorpositionsabhängigen Stromsteuerung, ein "Gleichfeld" erregt, was ein Herausdrehen der Welle aus ihrer Momentanlage verhindern und somit den Rotorpositionswinkel konstant halten soll. Der Betrag des dabei aufzubringende Erregungsstromes ist proportional zum Betrag des externen Drehmomentes.

Eine als wichtig einzustufende Erkenntnis ist, daß bei einem sich zeitlich verändernden externen Drehmoment im zeitlichen Verlauf der Motorsignale keine Phasenverschiebung der Strangströme von 120 bzw. 240 auftritt.

Da bei Lageregelung der Rotorpositionswinkel m konstant gehalten wird, ist bei einem konstantem externen Drehmoment, auch der zeitliche Verlauf aller drei Strangströme konstant. Konkret heißt dies jedoch, daß ohne Belastung alle drei in den Ständerwicklungen fließende Erregerströme gleich null sind. Bei einer sich zeitlich verändernden Belastung steigen die Amplituden der Erregerströme proportional zu den Belastungswechseln mit positivem oder negativem Vorzeichen. Ein sinusförmiger Verlauf der Strangströme kommt somit nur zustande, wenn das externe Lastmoment einen entsprechenden Verlauf aufweist. Die Phasenverschiebung der Strangströme gegeneinander ist in diesem Fall jedoch nicht 120 bzw. 240 , sondern annähernd 0 bzw. 180 .

Die Abb. 3.21 und 3.22 zeigen den Signalverlauf der drei Strangströme bei sich zeitlich verändernder Belastung in Lageregelung (Abb. 3.21 und 3.22) und bei Motorbetrieb mit der Drehzahl N = 375 min$^{-1}$ (Abb.

3.20).

Dabei wird in Abb. 3.22 zur Verdeutlichung der oben beschriebenen Sachverhalte noch einmal der Signalverlauf der Meßkanäle 2 und 3 der Abb. 3.21 in vergrößerter Darstellung wiedergegeben.

Um einen unerlaubten Motorstart zu detektieren, besteht lediglich die Notwendigkeit, die Strangströme im Hinblick auf ihren Augenblickswert kontinuierlich zu überwachen. Dabei kann eine Abweichung vom Wert $i_{Strang} = 0/A$ bzw. eine Abweichung von $i_{Strang} = konstant$ als Fehler interpretiert werden und eine Trennung des Servo-Regler-Ausgangs vom Motor erfolgen. Schwieriger erweist sich jedoch die Unterscheidung zwischen einem sich zeitlich verändernden Signalverlauf, verursacht durch Belastungsschwankungen bzw. durch Betrieb des Motors mit Drehzahl $N = 0$ $min^{-1}$. Die Auswertung der Phasenlage hinsichtlich der oben beschriebenen Merkmale wird als eine Lösung dieses Problems realisiert.

Nachfolgend sollen zwei Konzepte zur Auswertung der Phasenlage der Strangströme zur Übertragung eines Antriebes erläutert werden, welche die schnelle Detektion einer unerlaubten Beschleunigung des Motors aus der Lageregelung heraus ermöglichen. Eine Unterscheidung zwischen der unerlaubten Beschleunigung des Motors aus der Lageregelung und einem externen Belastungswechsel in Lageregelung wird mit diesem Konzepten ebenfalls realisiert.

So besteht die Möglichkeit, einer kontinuierlichen Signalabtastung.

Bei der Phasenauswertung durch kontinuierliche Abtastung des Analogsignals soll, wie bei allen anderen Konzepten auch, eine Unterscheidung zwischen Belastungswechsel in Lageregelung und unerlaubtem Beschleunigen des Motors aus der Lageregelung heraus erfolgen. Dafür werden die Signale aller drei Phasen mit Hilfe einer Auswerteelektronik analysiert.

Wird beim Anlauf oder bei Belastungswechsel eine Veränderung des Stromwertes erkannt, so wird die Tendenz aller drei Strangströme ermittelt. Ist der Signalverlauf für ein rotierendes Drehfeld erkannt, so wird diese als unerlaubte Beschleunigung des Motors aus der Lageregelung heraus interpretiert. Anhand Abb. 3.23 wird dieses Prinzip näher erläutert.

Im oberen Diagramm der Abb. 3.23 ist der Signalverlauf der drei Strangströme beim Motorlauf zu sehen. Angenommen zu Zeitpunkt t1 wird die eingestellte Schaltschwelle überschritten, so wird dieser Spannungswert als erster Bezugswert gespeichert. In zeitlich äquidistanten Abständen wird nun die Abtastung des Analogsignals erfolgen. Der neue Meßwert wird dabei immer mit dem vorherigen Meßwert verglichen und festgestellt, ob dieser Kleiner oder größer war. Mit dieser Methode kann somit eine Aussage über die Signaltendenz im Hinblick auf einen steigenden bzw. fallenden Signalverlauf getroffen werden. Spätestens zum Zeitpunkt tn kann ein charakteristisches Merkmal für den unerlaubten Motorlauf festgestellt werden. Zu diesem Zeitpunkt ist der Signalverlauf nicht mehr entgegengesetzt sondern gleich. Im zeitlichen Verlauf der Strangströme tritt in diesem Fall ein Wechsel von gegensätzlicher Tendenz zu gleichartiger Tendenz ein.

Vergleicht man dieses Merkmal mit den Verhältnissen bei Lageregelung, so stellt man fest, daß ein Tendenzwechsel in dieser Weise nicht stattfindet. Im zweiten Diagramm wurde der Übersicht halber nur die Signalverläufe der Phasen U und W dargestellt. Wie bereits erwähnt, können diese Signale gleichphasig oder mit 180 Phasenverschiebung auftreten. Zum Zeitpunkt t2 hat sich hier die Steigung beider Signale umgekehrt, was zu keiner Abschaltung führen würde.

Alternativ besteht die Möglichkeit der Stromrichtungsfolge-Auswertung zur Antriebsüberwachung.

Eine weitere Möglichkeit zur Phasenauswertung hinsichtlich der Kriterien Detektion der unerlaubten Beschleunigung des Motor aus der Lageregelung und der Unterscheidung dieser Beschleunigung gegenüber einem externen Lastwechsel in Lageregelung ist die Überwachung der Stromrichtungsfolge der Strangströme. Die Signale werden Komperatoreingängen zugeführt, welche bei Überschreitung der ersten Schaltschwelle einen positiven Spannungspegel und bei Unterschreiten der zweiten Schaltschwelle einen negativen Spannungspegel am Ausgang liefern. In der Zeit zwischen dem Durchschreiten der Schaltschwellen liegt der Komperatorausgang auf Null-Volt-Pegel. Abb. 3.24 verdeutlicht dieses Prinzip.

Wie zu erkennen ist, entstehen drei zu unterscheidende Zustände, welche mit einem Datenwort kodiert werden. Während den einzelnen, hier mit den Ziffern 1 .... 8 gekennzeichneten Zeiträumen entsteht eine bestimmte Kombination aus drei solcher Datenwörter, d.h. der Schaltzustand aller drei "Phasenkomperatoren" wird in jedem Zeitraum zu einem resultierenden Datenwort zusammengefaßt. Die Reihenfolge, mit der diese Datenwörter im zeitlichen Verlauf eines Drehstromsystems auftreten, ist immer identisch und kann, wenn einmal bekannt, als binäre Datenfolge gespeichert werden. Wird im Verlauf der Signalüberwachung ein Anstieg der Signale auf einer der Motorleitungen detektiert, so wird das zu diesem Zeitpunkt vorliegende Datenwort mit Hilfe logischer Schaltungen identifiziert. Die Reihenfolge der im weiteren zeitlichen Verlauf eintreffenden Datenwörter werden mit der gespeicherten Reihenfolge verglichen. Bei einer Übereinstimmung wird diese Signalauswertung als Motorlauf interpretiert und das Abschaltsignal generiert. Kann keine Übereinstimmung festgestellt werden. so wird das nächste Datenwort aufgenommen, gespeichert und der Vergleich beginnt von neuem.

Die erfindungsgemäße Lehre ist jedoch insbesondere auch zur Überwachung einer Einrichtdrehzahl eines Antriebes geeignet.

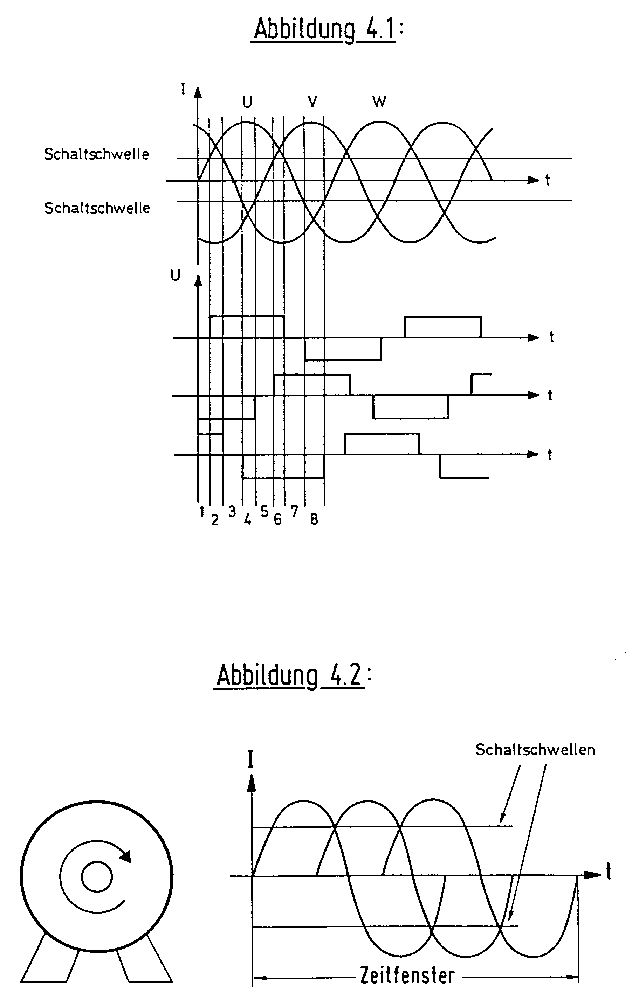

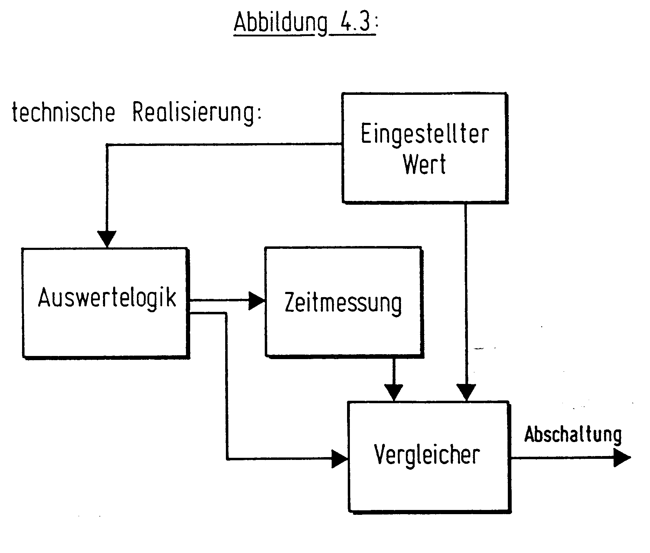

Zur Überwachung der Einrichtdrehzahl kann die Stromfolge der Strangströme überwacht werden. Dabei werden die Stromsignale ausgekoppelt, gefiltert und verstärkt. Diese Signale werden Komperatoreingängen zugeführt, welche bei Überschreitung der ersten Schaltschwelle einen positiven Spannungspegel und bei Unterschreiten der zweiten Schaltschwelle einen negativen Spannungspegel am Ausgang liefern. In der Zeit zwischen dem Durchschreiten der Schaltschwellen liegt der Komperatorausgang auf Null-Volt-Pegel. Abb. 4.1 dient zur Veranschaulichung dieses Prinzips.

Wie Abb. 4.1 zu erkennen gibt, entstehen drei zu unterscheidende Zustände, welche mit einem 2-Bit-Datenwort kodiert werden. Während den einzelnen, hier mit den Ziffern 1 .... 8 gekennzeichneten Zeiträumen entsteht eine bestimmte Kombination aus drei solcher 2-Bit-Datenwörter, d.h. der Schaltzustand aller drei "Phasenkomperatoren" wird in jedem Zeitraum zu einem 6-Bit-Datenwort zusammengefaßt. Die Reihenfolge, mit der diese 6-Bit-Datenwörter im zeitlichen Verlauf eines Drehstromsystems auftreten, ist immer identisch und kann, wenn einmal bekannt, als binäre Datenfolge in einem EPROM abgespeichert werden. Wird im Verlauf der Signalüberwachung ein Anstieg der Stromsignale auf einer der Motorleitungen detektiert, so wird das zu diesem Zeitpunkt vorliegende Datenwort mit Hilfe logischer Schaltungsgruppen identifiziert. Die Reihenfolge der im weiteren zeitlichen Verlauf eintreffenden Datenwörter werden mit der im EPROM abgelegten Reihenfolge verglichen. Die wird elektronisch ausgewertet

Diese digitale Auswertung der Bitmuster liefert einen Impuls, nachdem der Motor bei nicht aktivierter Abschaltung eine Umdrehung vollendet hat.

Ein Rechteckgenerator wird mit diesem Impuls gestartet. Die Impulse des Rechteckgenerators werden gezählt und über einen Vergleicher mit einem voreingestellten Wert verglichen.

Bei der nächsten Umdrehung des Motors generiert die Auswertelogik der Bitmuster einen weiteren Impuls, der den Zähler stoppt und einen Vergleicher aktiviert.

Ist der im Zähler enthaltene Wert größer wie der voreingestellte, liegt die Istdrehzahl des Motors im Akzeptanzbereich der Schaltung und es wird nicht abgeschaltet.

Eine Drehzahlauswertung erfolgt immer nach einem Umlauf des Drehfeldes.

Der Überwachungsbereich kann vom Bediener vorgegeben werden.

Die Detektion über den Strom hat gegenüber der Spannung den Vorteil, daß bei kleinen Drehzahlen ( unter Belastung des Motors ) auch eine Abschaltung nach einer Umdrehung des Drehfeldes möglich ist (entspricht Einrichtdrehzahl N=0).

Die Abb. 4.2 und 4.3 zeigen das Prinzip der Einrichtdrehzahlüberwachung bzw. deren technische Realisierung.

## Patentansprüche

1. Verfahren zur Überwachung wie Stillstands- und/oder Einrichtdrehzahlüberwachung eines Antriebs, insbesondere hochdynamischen Servoantriebs,
   **dadurch gekennzeichnet**,
   daß durch Analyse und/oder Vergleich der Motorströme und/oder -spannungen des Antriebs die Überwachung erfolgt.

2. Verfahren nach Anspruch 1,
   **dadurch gekennzeichnet**,
   daß eine Analyse der Oberwellenanteile von zumindest einer Strang- oder Außenleiterspannung, vorzugsweise sämtlicher Strang- oder Außenleiterspannungen erfolgt.

3. Verfahren nach Anspruch 2,
   **dadurch gekennzeichnet**,
   daß hochfrequente Anteile der Strang- oder Außenleiterspannung bzw. Strang- oder Außenleiterspannungen ausgefiltert und integriert werden und daß eine innerhalb einer vorgebbaren Zeit aufintegrierte Spannung mit einem vorgegebenen, Rückschlüsse auf eine gefahrbringende Bewegung des Antriebs bzw. dessen Stillstands ermöglichenden Spannungswert verglichen wird.

4. Verfahren nach zumindest einem der vorhergehenden Ansprüche,
   **dadurch gekennzeichnet**,
   daß die Strang- oder Außenleiterspannungen in Abhängigkeit von Schwellenwerten in Spannungsmuster zerlegt werden, daß bei Erreichen eines der Schwellenwerte von einer der Strang- oder Außenleiterspannungen die zu diesem Zeitpunkt vorliegenden Spannungsmuster sämtlicher Strang- oder Außenleiterspannungen ermittelt werden und daß die so ermittelten Spannungsmuster mit einem vorgegebenen Muster verglichen werden.

5. Verfahren nach zumindest einem der vorhergehenden Ansprüche,
   **dadurch gekennzeichnet**,
   daß ermittelte Spannungsmuster mit vorgegebenen Mustern oder mit vorausgehend bzw. nachfolgend gemessenen Spannungsmustern verglichen werden.

6. Verfahren nach zumindest einem der vorhergehenden Ansprüche,
   **dadurch gekennzeichnet**,
   daß die Strangströme in Abhängigkeit von Schwellenwerten in Strommuster zerlegt werden, daß bei Erreichen eines der Schwellenwerte von einem der Strangströme die zu diesem Zeitpunkt vorliegenden Strommuster sämtlicher Strangströme ermittelt werden und daß die so ermittelten Strommuster mit einem vorgegebenen Muster verglichen werden.

7. Verfahren nach zumindest einem der vorhergehenden Ansprüche,
   **dadurch gekennzeichnet**,
   daß ermittelte Strommuster mit vorgegebenen Mustern oder mit vorausgehend bzw. nachfolgend gemessenen Strommustern verglichen werden.

8. Verfahren nach zumindest einem der vorhergehenden Ansprüche,
   **dadurch gekennzeichnet**,
   daß von zumindest einem Strangstrom sowohl zumindest dessen Amplitude als auch der zeitliche Verlauf dessen Flanke bestimmt werden, daß bei Erreichen eines vorgegebenen Schwellenwerts die Zeitdauer des Flankenanstieges von einem zuvor festgelegten Schwellenwert bis zu dem überschrittenen Schwellenwert ausgewertet wird (Abb. 3.18).

9. Verfahren nach zumindest einem der vorhergehenden Ansprüche,
   **dadurch gekennzeichnet**,
   daß die Strangströme in ihren Phasenbeziehungen zueinander in zeitlich vorgegebenen Abständen ermittelt werden und mit vorgegebenen einem gewünschten Betrieb des Antriebs zugeordneten Phasenbeziehungen verglichen werden.

10. Verfahren nach zumindest einem der vorhergehenden Ansprüche,
    **dadurch gekennzeichnet**,
    daß zur Überwachung einer Drehzahl, insbesondere Einrichtdrehzahl des Antriebs Strom- oder Spannungssignale ausgekoppelt und der zeitliche Abstand entsprechender Signale gleichen Musters bestimmt wird.

11. Verfahren nach zumindest einem der vorhergehenden Ansprüche,
    **dadurch gekennzeichnet**,
    daß die Strang- oder Außenleiterspannungen des Antriebes zur Ansteuerung eines Referenzantriebes aufbereitet werden.

12. Verfahren nach Anspruch 11,
    **dadurch gekennzeichnet**,
    daß zur Überwachung des Antriebs von dem Referenzmotor abgeleitete mechanische und/oder elektronische Signale ausgewertet werden.

13. Lastrelais insbesondere bestimmt zur Anwendung bei einem Verfahren zur Überwachung wie Stillstands- und/oder Einrichtdrehzahlüberwachung eines Antriebs, insbesondere hochdynamischen Servoantriebs, und/oder zum sicheren Abschalten des Antriebs,
    **dadurch gekennzeichnet**,
    daß das Lastrelais als überwachtes Halbleiterbauelement (22, 24, 26) ausgebildet ist.

14. Lastrelais nach zumindest einem der vorhergehenden Ansprüche,
    **dadurch gekennzeichnet**,
    daß im Hauptstromkreis des Antriebs, insbesondere zwischen diesem und Ausgang eines diesem vorgeschalteten Reglers, ein Leistungshalbleiterbauelement insbesondere IGBT (22, 24, 26) mit parallel geschalteter Diode (40, 42, 44) angeordnet ist, daß das Leistungshalbleiterbauelement galvanisch getrennt ansteuerbar ist und daß die Richtung der das Leistungshalbleiterbauelement bzw. die Diode durchfließenden Ströme, dessen Gesamtgröße sowie die an dem Leistungshalbleiterbauelement anliegende Spannung über Sensoren (S1, S2) bestimmbar ist.

15. Lastrelais nach zumindest einem der vorhergehenden Ansprüche,
    **dadurch gekennzeichnet**,
    daß der Leistungshalbleiterbauelement (22, 24, 26) über einen Optokoppler (34, 36, 38) ansteuerbar ist.

16. Lastrelais nach zumindest einem der vorhergehenden Ansprüche,
    **dadurch gekennzeichnet**,
    daß dem Leistungshalbleiterbauelement wie IGBT (22, 24, 26) und der Diode (40, 42, 44) ein erster und zweiter Sensor (S1, S2) zugeordnet sind, die die Richtung des durch das Leistungshalbleiterbauelement bzw. die Diode fließenden Stroms bestimmt, daß dem Leistungshalbleiterbauelement und der Diode ein weiterer dritter Sensor (S0) zugeordnet ist, über den der über das Leistungshalbleiterbauelement und die Diode fließende Gesamtstrom ermittelbar ist, und daß die an dem Leistungshalbleiterbauelement anliegende Spannung über einen vierten Sensor (S3) wie Transformator bestimmbar ist.

17. Lastrelais nach zumindest einem der vorhergehenden Ansprüche,
    **dadurch gekennzeichnet**,
    daß das Leistungshalberleiterbauelement durch eine Röhre ersetzbar ist.

Überwachungseinrichtung

Abschaltsignal

U    V    W

| 10 | 16 | 34 | 100 |
Trafo → Gleich-richter → Opto-koppler → 100

Netzspannung

| 12 | 18 | 36 |
Trafo → Gleich-richter → Opto-koppler → 100

| 14 | 20 | 38 |
Trafo → Gleich-richter → Opto-koppler → 100

M

<u>Abbildung 2.1:</u>

U    V    W

22   24   26

16   18   20

42   44   46

Abschaltsignal

34   36

11  28   11  30   11  32   38

20 18 16

Relais-Korrekt.

47   48   50

<u>Abbildung 2.2:</u>

M

## Abbildung 2.3:

Strom durch das Ventil

Strom durch die Diode

transformierte, auf den künstlichen Sternpunkt bezogene Spannung

Sternpunkt

U V W

M

100

Ausgang Verstärker

## Abbildung 2.4:

Ansteuersignale

U V W

M

11

Abbildung 3.1:

Abbildung 3.1.2:

Abbildung 3.2:

| galvanische Trennung | Bandpaß | Integrator | Komperator |
|---|---|---|---|

Abbildung 3.3:

```
258.0                                           U_UW
                                          Ry    6.000 U
                                           y   -4.000 U
                                          dy   18.000 U




U



-258.0

Rx:  -3.9926        x:  -2.9942        dx: 998.4000       Display
```

Abbildung 3.4:

Abbildung 3.5:

Abbildung 3.6:

## Abbildung 3.7:

## Abbildung 3.8:

U

Abbildung 3.9:

Lage-
regelung | Anlauf | eingeschwungener
Zustand

Komperatorschwellen

t

Abbildung 3.10:

I

1  4

Schaltschwellen

t

2
3

5

## Abbildung 3.11:

## Abbildung 3.12:

# Abbildung 3.13

Stromverlauf bei
Motornennbetrieb

## Abbildung 3.14:

## Abbildung 3.15:

## Abbildung 3.16:

```
10.0 ─────────────────────────┬ I_V
  V  ─────────────────────────┤ Ry   00.000 nV
     ─────────────────────────┤ y    <undef insd:>
-10.0 ─────────────────────────┘ dy   10.320 V

                               I_V
10.0 ─────────────────────────┬ Ry   -4.000 V
  V  ─────────────────────────┤ y    00.000 mV
     ─────────────────────────┤ dy   -4.000 V
-10.0 ─────────────────────────┘ I_V
                               Ry   -3.120 V
                               y     6.160 V
10.0 ─────────────────────────  dy   -9.200 V
  V  ─────────────────────────
-10.0 ─────────────────────────
```

## Abbildung 3.17:

```
 4.0 ─────────────────────────┬ I_V
  V  ─────────────────────────┤ Ry    2.000 V
     ─────────────────────────┤ y    -4.000 V
-4.0 ─────────────────────────┘ dy    6.160 V

                               I_V
                               Ry   -2.600 V
 4.0 ─────────────────────────  y   -100.000 V
  V  ─────────────────────────  dy   -2.120 V
-4.0 ─────────────────────────  I_V
                               Ry  -760.000 nV
                               y     3.560 V
 4.0 ─────────────────────────  dy   -4.320 V
  V  ─────────────────────────
-4.0 ─────────────────────────
```

19

## Abbildung 3.18:

Signalverlauf bei Motor-Start

Signalverlauf bei Lageregelung

Schaltschwelle 2 pos.
Schaltschwelle 1 pos.
Schaltschwelle 1 neg.
Schaltschwelle 2 neg.

1 < 1 max = Abschalten    1 > 1 max = nicht Abschalten

## Abbildung 3.19:

| Signal-Auskopplung | → | Signalaufbereitung |

Überwachung der unteren Schaltschw. ← Generierung der unteren Schaltschw.

Stop-Signal generieren ← Überwachung der Anstiegszeit ←

Überwachung der oberen Schaltschw. ← Generierung der oberen Schaltschw.

## Abbildung 3.20

```
                                              I_V
 10.0                                         Ry   960.000 mV
  V                                            y     1.120 U
                                              dy  -160.000 mV
-10.0
                                              I_V
                                              Ry   -00.000 mV
 10.0                                          y    -4.160 V
  V                                           dy     4.000 V
-10.0                                         I_V
                                              Ry    -4.400 V
                                               y  -400.000 mV
                                              dy     4.000 V
 10.0
  V
-10.0
```

## Abbildung 3.21:

```
                                              I_V
 20.0                                         Ry    -3.400 V
  V                                            y     3.400 V
                                              dy     6.000 V
-20.0
                                              I_V
                                              Ry    11.000 V
 20.0                                          y    10.000 V
  V                                           dy     1.000 V
-20.0                                         I_V
                                              Ry   -11.400 V
                                               y  -11.400 V
                                              dy     0.000 V
 20.0
  V
-20.0
```

## Abbildung 3.22 :

# Abbildung 3.2.3:

Phasenbeziehung bei
Motornennbetrieb

I

U    V    W

Schaltschwelle

t

Phasenbeziehung bei
Belastungswechsel in
Lageregelung

I

U    W

Schaltschwelle

t

$t_1$    $t_n$

Abtastzeitpunkte

# Abbildung 3.24:

Stromverlauf bei
Motornennbetrieb

Stromverlauf bei Belastungswechsel in
Lageregelung

## Abbildung 4.1:

## Abbildung 4.2:

Abbildung 4.3:

technische Realisierung:

Eingestellter Wert

Auswertelogik → Zeitmessung

Vergleicher → Abschaltung

Europäisches
Patentamt

**EUROPÄISCHER RECHERCHENBERICHT**

Nummer der Anmeldung

EP 96 11 7059

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | EP 0 247 994 A (AUSTRIA ANTRIEBSTECHNIK G. BAUKNECHT) | 1,2 | G01P13/04 H02H3/52 |
| A | * Seite 2, Zeile 25 - Seite 3, Zeile 6; Abbildung 1 * | 13 | |
| | --- | | |
| Y | US 5 083 634 A (MASASHI YONEMOTO) | 1,2 | |
| A | * Spalte 1, Zeile 64 - Spalte 2, Zeile 8; Abbildung 1 * | 13,14 | |
| | --- | | |
| A | FR 2 479 474 A (EL-FI INNOVATIONER AB) * Seite 1, Zeile 9-30; Abbildungen 1-3 * | 1-3 | |
| | --- | | |
| A | EP 0 024 969 A (THE BENDIX CORPORATION) * Seite 5, Zeile 2-15; Abbildungen 2-4 * | 4-7 | |
| | ----- | | |
| | | | **RECHERCHIERTE SACHGEBIETE (Int.Cl.6)** |
| | | | G01P H02H |

Der vorliegende Recherchenbericht wurde für alle Patentansprüche erstellt

| Recherchenort | Abschlußdatum der Recherche | Prüfer |
|---|---|---|
| DEN HAAG | 30.Januar 1997 | Hansen, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
·····························································································
& : Mitglied der gleichen Patentfamilie, übereinstimmendes Dokument